Europäisches Patentamt

European Patent Office

Office européen des brevets

(19)

(11) Numéro de publication : **0 306 363 B1**

(12) **FASCICULE DE BREVET EUROPEEN**

(45) Date de publication du fascicule du brevet :
04.12.91 Bulletin 91/49

(51) Int. Cl.⁵ : **A47C 7/18**

(21) Numéro de dépôt : **88401969.6**

(22) Date de dépôt : **28.07.88**

(54) **Elément de siège notamment pour véhicule automobile.**

(30) Priorité : **05.08.87 FR 8711150**

(43) Date de publication de la demande :
**08.03.89 Bulletin 89/10**

(45) Mention de la délivrance du brevet :
**04.12.91 Bulletin 91/49**

(84) Etats contractants désignés :
**BE DE ES GB IT NL SE**

(56) Documents cités :
**FR-A- 2 406 537**
**US-A- 3 630 572**
**US-A- 4 099 278**

(73) Titulaire : **ECIA - EQUIPEMENTS ET
COMPOSANTS POUR L'INDUSTRIE
AUTOMOBILE**
**F-25400 Audincourt (Doubs) (FR)**

(72) Inventeur : **Meunier, Claude**
**Lot Combe Benoit**
**F-25310 Roches les Blamont (FR)**
Inventeur : **Coussemacq, Jean Marc**
**5, Rue de Provence**
**F-25700 Valentigney (FR)**
Inventeur : **Fourrey, François**
**34, rue du Petit Chênois**
**F-25200 Montbeliard (FR)**

(74) Mandataire : **de Morgues, Marie Emma et al
Cabinet Lavoix 2, place d'Estienne d'Orves**
**F-75441 Paris Cédex 09 (FR)**

**Description**

L'invention concerne un élément de siège, assise ou dossier, notamment pour véhicule automobile, de fabrication simple et économique et dont on peut modifier aisément le revêtement.

La fabrication des garnissages de siège, ainsi que la mise en place de ceux-ci sur les armatures correspondantes, posent de nombreux problèmes tels que la multiplicité des coutures nécessaires afin de donner au garnissage la forme désirée, la difficulté d'accès pour réaliser l'accrochage du garnissage en différents points de l'armature, la nécessité de permettre le changement d'une partie quelconque du garnissage, en particulier du revêtement, en cas de détérioration ou souillures accidentelles.

Un état de la technique est illustré par le document US 3630572. Ce document divulgue un élément de siège du type exposé dans le préambule de la revendication principale.

La présente invention a pour but de résoudre ces problèmes en réalisant un élément de siège économique, de montage aisé, dont le revêtement est facilement modifié à volonté

L'invention a pour objet un élément de siège, notamment pour véhicule automobile, comprenant une armature formant un cadre fermé et supportant des tiges d'accrochage et un garnissage recouvert d'un revêtement muni de moyens de fixation aux tiges d'accrochage caractérisé en ce qu'il comporte un organe amovible de maintien et de mise en tension du revêtement, emboîtable sur le cadre de l'armature et constituant le dos ou le fond de l'élément de siège.

Selon d'autres caractéristiques :

— l'organe amovible de maintien est constitué par une plaque comportant sur pratiquement toute sa périphérie des parties latérales en saillie, qui s'emboîtent sur le cadre d'armature ;

— les parties latérales comportent une première partie en forme de portion de cylindre ouverte vers l'extérieur qui assure la mise en tension du revêtement et une deuxième partie prolongeant la première au-delà de la plaque pour maintenir le revêtement ;

— les parties latérales comportent des échancrures de déformation élastique ;

— les moyens de fixation sont constitués par des fils de mise en forme fixés au revêtement et venant s'accrocher sur les tiges d'accrochage et des liens élastiques de mise en tension situés aux extrémités du revêtement et solidaires de ce dernier.

L'invention a en outre pour objet un dispositif de montage d'un élément de siège comportant un gabarit creux destiné à recevoir un élément de siège préalablement garni, ce gabarit ayant un fond dont la forme est complémentaire de celle de l'élément de siège et étant muni sur tout son pourtour intérieur de lames escamotables de maintien en tension, en un matériau élastique, insérées dans des rainures inclinées. Un mode particulier de réalisation de l'invention fait l'objet de la revendication 5.

L'invention sera décrite plus en détail ci-dessous en se référant aux dessins annexés donnés uniquement à titre d'exemple et dans lesquels :

— la Fig. 1 représente une vue en coupe de l'élément de siège garni ;

— la Fig. 2 est une vue en perspective de l'organe de maintien amovible ;

— la Fig. 3 représente une vue de dessous de l'élément de siège de la Fig. 1 avant montage de l'organe de maintien ;

— la Fig. 4 représente une vue en coupe du dispositif de montage selon l'invention.

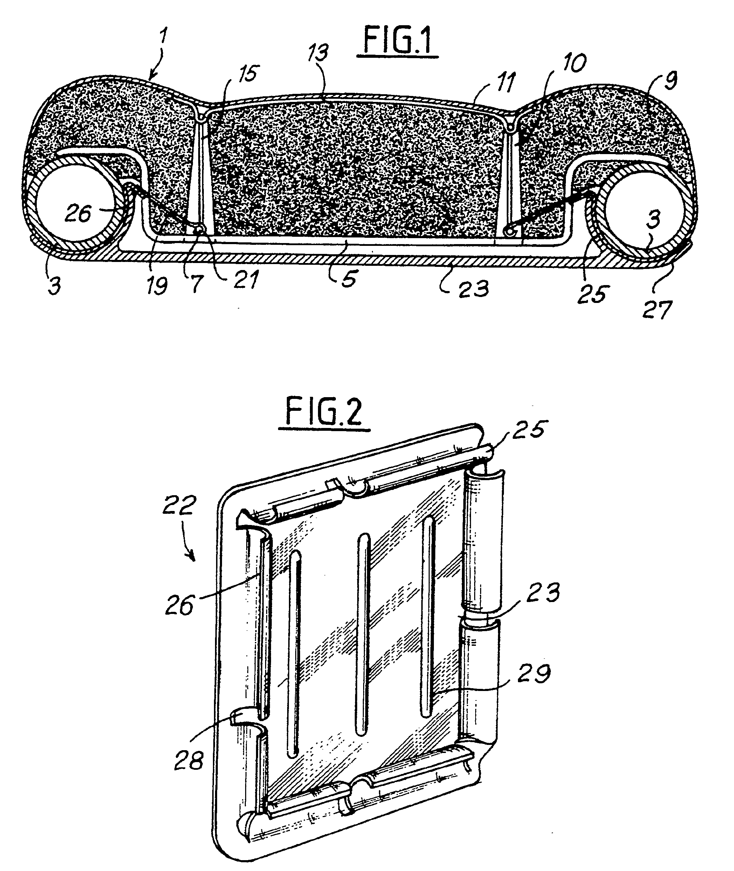

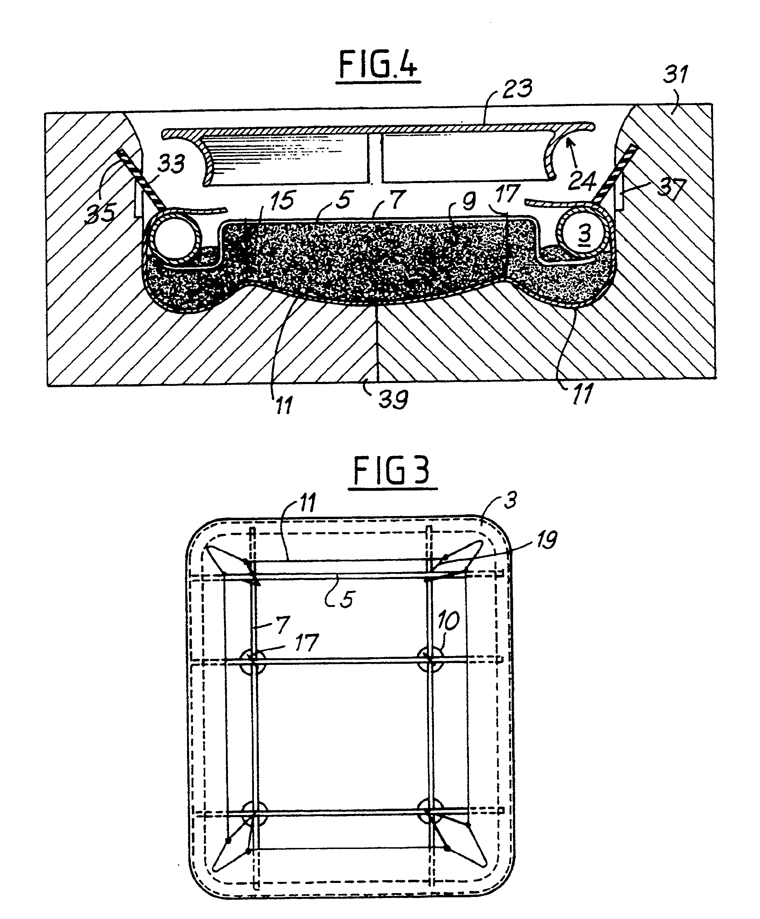

On a représenté figures 1 et 3 un élément de siège, assise ou dossier, pour véhicule automobile. L'élément de siège, de référence générale 1, comporte une armature tubulaire 3 formant un cadre fermé, sur lequel sont soudées par point des tiges d'accrochage et de renforts 5, 7. Dans le mode de réalisation représenté, l'armature a une section droite circulaire, mais il est bien entendu que l'invention s'applique à des armatures ayant une section droite de forme différente et pouvant être pleines ou creuses.

Les tiges 5, 7 sont disposées perpendiculairement les unes aux autres de manière à former un treillis. Un garnissage 9 de rembourrage, ayant la forme souhaitée est placé sur l'ensemble formé par les tiges et l'armature. Le garnissage peut être en un matériau souple quelconque, de préférence en mousse élastique. Il comporte une série d'évidements 10 disposé de manière à correspondre à des points de croisement des tiges 5 et 7.

Un revêtement 11, qui peut être en tissu ou en tout autre matériau de présentation et qui est découpé selon une forme appropriée, recouvre le garnissage 9 et l'armature 3. Une série de bandes de toile 13 sont fixées au revêtement 11 par tout moyen approprié, par exemple collage ou couture, et sont réparties à intervalles réguliers. Ces bandes de toile sont munies de fils 15 de tension et de mise en forme dont une extrémité est fixée aux bandes de toile et l'autre extrémité se termine par des petits crochets 17 destinés à venir s'accrocher sur les tiges d'accrochage 5 et 7.

Les fils 15 sont répartis sur les différentes bandes de manière à correspondre aux emplacements des évidements 10 du garnissage et il sont tendus de manière à donner au siège terminé la forme souhaitée. En outre, les bords rabattus du revêtement 11 s'étendent au-delà de l'armature 3 et sont munis de liens élastique 19 de mise en tension préalable comportant à leur extrémité opposée à la fixation sur le revêtement, des crochets 21 venant se fixer sur les tiges d'accrochage 5 et 7.

Un organe amovible, ou dos, 22 assure le maintien et la mise en tension complète du revêtement.

Le dos 22 (Fig. 2) est constitué par une plaque centrale 23 comportant des parties latérales 24, ou ailes, qui s'étendent pratiquement sur toute la périphérie de la plaque et qui font saillie à partir de l'une de ses faces. Les ailes 24 ont en section une forme complémentaire de celle du cadre. Dans le mode de réalisation représenté elles ont sensiblement la forme d'une portion de cylindre ouverte vers l'extérieur, ou gouttière, et viennent s'emboîter sur le cadre tubulaire 3. Une première partie 25 des ailes 24 est emboîtée sur l'armature de manière telle que son extrémité 26 repousse le revêtement 11 vers l'intérieur du garnissage 9 et est située au-delà d'un diamètre horizontal du tube d'armature, cette extrémité 26 assure la mise en tension des liens élastiques 19. Une deuxième partie incurvée 27 prolonge la partie 25 au-delà de la plaque 23 afin de compléter la gouttière

Les ailes 24 comportent des échancrures 28 permettant d'avoir la déformation élastique nécessaire lors de l'emboîtage du dos 22 sur l'armature. Si nécessaire, la plaque 23 peut comporter des nervures de rigidification 29.

L'opération de garnissage du siège se déroule de la manière suivante. Tout d'abord on place la mousse 9 sur l'armature 3. On la recouvre par le revêtement 11 en ayant soin d'introduire les fils 15 et les crochets 17 dans les évidements 10. On retourne ensuite l'ensemble et on procède à la fixation des fils 15 et des liens 19 en plaçant les crochets 17 et 21 sur les tiges d'accrochage 5 et 7, de préférence à l'endroit où les tiges se croisent (Fig. 3). Le garnissage prend alors la forme souhaitée sous l'action des fils 15 et le revêtement 11 est prépositionné sous l'action des liens élastiques 19. On termine le garnissage en venant emboîter le dos 22 contre l'armature, les ailes 24 forçant la tension et emprisonnant le revêtement 11 contre l'armature 3. L'emboîtage du dos assure ainsi la mise en forme finale correcte et la mise en tension adéquate du revêtement 11 en venant appuyer et tendre ce revêtement sur l'armature 3 par l'intermédiaire des ailes 24.

L'élément de siège ainsi réalisé présente de nombreux avantages. Par sa découpe appropriée, le revêtement 11 ne nécessite que peu de coutures préalables de mise en forme. Il est possible de modifier indépendamment l'une de l'autre les couleurs et les matières respectives du revêtement et du dos. Il est aussi possible pour l'utilisateur de changer très facilement le revêtement de son élément de siège lorsque a été fortuitement détérioré ou souillé et ceci sans nécessiter d'outils spéciaux et sans détérioration même partielle des autres éléments du siège. Il est bien entendu également très facile de changer le dos 22 lorsque celui-ci a été abimé. Cette caractéristique est particulièrement intéressante dans le cas d'un siège arrière de véhicule automobile dont l'assise est basculable vers l'avant et le dossier rabatable, de manière à augmenter de façon significative le volume disponible du coffre.

On a représenté Fig. 4, un autre mode de réalisation de l'élément de siège 1 et son procédé de montage.

L'élément de siège 1 est préalablement garni et revêtu, mais le revêtement 11 n'est raccordé à l'armature que par les seuls fils 15 et les crochets 17 qui sont fixés aux tiges d'accrochage 5 et 7, ses bords ne comportant pas de liens élastiques 19, ni de crochets 21. Cet élément de siège est placé, sa face arrière regardant vers le haut à l'intérieur d'un gabarit creux 31, dont le fond reproduit exactement la forme définitive de l'élément de siège 1. Le gabarit comporte sur tout son pourtour intérieur des lames escamotables 33 en caoutchouc, insérées dans des rainures en biais 35 d'où elles font saillie vers l'intérieur du gabarit et délimitent une entrée se rétrécissant progressivement. Les parties supérieures du gabarit 31 sont arrondies de manière à faciliter l'introduction de l'élément de siège dedans.

Lors de la mise en place de l'élément de siège dans le gabarit 31, les lames de caoutchouc 33 s'effacent partiellement en venant se placer dans des rainures axiales 37 de réception et contribuent par frottement à provoquer et à répartir la tension du revêtement 11 tout autour de l'armature 3.

Dès que l'armature 3 arrive au niveau des rainures 37, les lames 33 sortent progressivement de ces rainures du fait de leur élasticité et forcent ainsi le bord du revêtement 11 à venir se rabattre sur le dos de l'armature 3 tout en maintenant la tension correcte de ce revêtement.

On peut alors venir emboîter le dos 22 comme décrit précédemment. L'extraction de l'élément de siège terminée se fait par ouverture du gabarit 31 suivant au moins un plan médian 39 de séparation de manière à faciliter l'extraction.

Ce deuxième mode de réalisation de l'élément de siège de l'invention permet d'éliminer les liens élastiques de tension 19 et les crochets 21 du revêtement 11, ce qui rend la réalisation encore plus économique.

## Revendications

1. Elément de siège, notamment pour véhicule automobile, comprenant une armature (3) formant un cadre fermé et supportant des tiges d'accrochage (5, 7) et un garnissage (9) recouvert d'un revêtement muni de moyens de fixation aux tiges d'accrochage, caractérisé en ce qu'il comporte un organe amovible (22) de maintien et de mise en tension du revêtement, emboîtable sur le cadre de l'armature et constituant le dos ou le fond de l'élément de siège.

2. Elément de siège selon la revendication 1, caractérisé en ce que l'organe amovible (22) de maintien est constitué par une plaque (23) comportant sur pratiquement toute sa périphérie, des parties latérales (24), qui font saillie à partir de l'une des faces de la plaque (23) et qui s'emboîtent sur le cadre de l'armature.

3. Elément de siège selon les revendications 1 à 2, caractérisé en ce que les parties latérales (24) comportent une première partie (25) en forme de portion de cylindre ouverte vers l'extérieur qui assure la mise en tension du revêtement (11) et une deuxième partie (17) prolongeant la première (25) au-delà de la plaque (23) pour maintenir le revêtement (11).

4. Elément de siège selon l'une des revendications 2 et 3, caractérisé en ce que les parties latérales (24) comportent des échancrures (28) de déformation élastique.

5. Elément de siège selon l'une des revendications 2 à 4, caractérisé en ce que l'organe amovible (22) comporte des nervures de rigidification (29) dans sa partie centrale (23).

6. Elément de siège selon l'une des revendications 1 à 5, caractérisé en ce que les moyens de fixation sont constitués par des fils (15) de mise en forme fixés au revêtement et munis de crochets (17) destinés à venir en prise avec les tiges d'accrochage.

7. Elément de siège selon la revendication 6, caractérisé en ce que les moyens de fixation comportent en outre des liens élastiques (19) de mise en tension munis de crochets (21) situés aux extrémités du revêtement (11) et solidaires de ce dernier.

8. Dispositif de montage d'un élément de siège selon l'une des revendications 1 à 6, caractérisé en ce qu'il comporte un gabarit creux (31) destiné à recevoir un élément de siège préalablement garni, ce gabarit (31) ayant un fond dont la forme est complémentaire de celle de l'élément de siège garni et étant muni sur tout son pourtour intérieur de lames (33) de mise et de maintien en tension escamotables, en un matériau élastique, insérées dans des rainures inclinées (35).

9. Dispositif selon la revendication 8, caractérisé en ce que le gabarit (31) comporte des rainures axiales (37) de réception des lames (33) repoussées par l'élément de siège (1) lorsqu'il entre dans le gabarit, les lames (33) tendant à reprendre leur position normale en saillie dès que l'armature (3) arrive au niveau desdites rainures (37), de manière à maintenir la tension du revêtement.

10. Dispositif selon la revendication 7 ou 8, caractérisé en ce que le gabarit (31) est séparable en deux parties suivant au moins un plan médian (37) de manière à faciliter l'extraction du siège.

**Patentansprüche**

1. Element insbesondere für einen Fahrzeugsitz mit einem Gestell (3), welches einen geschlossenen Rahmen bildet und auf welchem Einhängevorrichtungen (5, 7) angebracht sind, und mit einem Polsteraufsatz 9, welcher mit einem Bezug überzogen ist, der mit Vorrichtungen zur Befestigung an den Einhängevorrichtungen versehen ist, dadurch gekennzeichnet, daß das Element ein herausnehmbares Teil (22) zum Halten und Verspannen des Bezugs aufweist, welches sich an dem Rahmen des Gestells befestigen läßt und den Rücken oder den Boden des Sitzelementes bildet.

2. Sitzelement nach Anspruch 1, dadurch gekennzeichnet, daß das herausnehmbare Halteteil (22) aus einer Platte (23) besteht, die über nahezu ihren gesamten Umfang Seitenteile (24) aufweist, die von einer Seite der Platte (23) hervorstehen und sich an dem Rahmen des Gestells befestigen lassen.

3. Sitzelement nach den Ansprüchen 1 bis 2, dadurch gekennzeichnet, daß die Seitenteile (24) ein erstes zylinderförmiges Teil (25) umfassen, welches sich nach außen hin öffnet und welches das Verspannen des Bezugs (11) gewährleistet, und ein zweites Teil (17), welches das erste Teil (25) zum Halten des Bezuges (11) über die Platte (23) hinaus verlängert.

4. Sitzelement nach einem der Ansprüche 2 oder 3, dadurch gekennzeichnet, daß die Seitenteile (24) elastisch verformbare Aussparungen (28) aufweisen.

5. Sitzelement nach einem der Ansprüche 2 bis 4, dadurch gekennzeichnet, daß das herausnehmbare Teil (22) in seinem mittleren Bereich (23) Versteifungsrippen (29) aufweist.

6. Sitzelement nach einem der Ansprüche 1 bis 5, dadurch gekennzeichnet, daß die Befestigungsvorrichtungen als formgebende Schnüre (15) ausgebildet sind, welche an dem Bezug befestigt sind und Haken (17) aufweisen, die in die Einhängevorrichtungen eingreifen.

7. Sitzelement nach Anspruch 6, dadurch gekennzeichnet, daß die Befestigungsvorrichtungen des weiteren elastische Spann-Verbindungsglieder (19) aufweisen, welche mit Haken (21) versehen sind, die an den Enden des Bezugs (11) angeordnet und fest mit diesem verbunden sind.

8. Vorrichtung zum Einbau eines Sitzelementes nach einem der Ansprüche 1 bis 6, dadurch gekennzeichnet, daß die Vorrichtung ein hohles Formteil (31) zur Aufnahme eines vorher gepolsterten Sitzelementes aufweist, das einen Boden besitzt, dessen Form der des gepolsterten Sitzelementes entspricht, und das über seinen gesamten Innenumfang hinweg zur Verspannung und Aufrechterhaltung der Spannung mit einklappbaren, aus einem elastischen Material bestehenden Lamellen (33) versehen ist, die in schrägen Nuten (35) eingesetzt sind.

9. Vorrichtung nach Anspruch 8, dadurch gekennzeichnet, daß das Formteil (31) mit Axialnuten (37) zur Aufnahme der Lamellen (33) versehen ist, welche von dem Sitzelement (1) bei seinem Eintritt in das Formteil zurückgedrängt werden, wobei die Lamellen (33) dazu neigen, ihre normale, hervorstehende Position wieder einzunehmen, sobald das Gestell (3) die Höhe der Nuten (37) erreicht hat, so daß die Spannung des Bezugs aufrechterhalten wird.

10. Vorrichtung nach Anspruch 7 oder 8, <u>dadurch gekennzeichnet</u>, daß das Formteil (31) zumindest in der Mittelebene (39) in zwei Teile trennbar ist, wodurch das Herausnehmen des Sitzes erleichtert wird.

## Claims

1. A seat element, particularly for a motor vehicle, comprising a framework (3) forming a closed frame and supporting engaging rods (5, 7) and a lining (9) having a covering provided with means of attachment to the engaging rods, characterised in that it comprises retractable maintaining means (22) and a means of tensioning the lining, and adapted to be fitted into the frame of the framework and constituting the back or the bottom of the seat element.

2. A seat element according to claim 1, characterised in that the removable maintaining means (22) consists of a plate (23) comprising over virtually its entire periphery lateral parts (24) which project from one of the faces of the plate (23) and which fit into the frame of the framework.

3. A seat element according to claims 1 to 2, characterised in that the lateral parts (24) comprise a first part (25) shaped like an outwardly open portion of a cylinder which ensures tensioning of the covering (11) and a second part (17) which extends the first (25) beyond the plate (23) in order to secure the covering (11).

4. A seat element according to one of claims 2 and 3, characterised in that the lateral parts (24) comprise notches (28) capable of elastic deformation.

5. A seat element according to one of claims 2 to 4, characterised in that the removable element (22) comprises rigidifying ribs (29) in its central part (23).

6. A seat element according to one of claims 1 to 5, characterised in that the fixing means consists of shaping wires (15) attached to the covering and provided with hoots (17) adapted to engage the engaging rods (7).

7. A seat element according to claim 6, characterised in that the fixing means furthermore comprise resilient tensioning means (19) provided with hoots (21) situated at the ends of and rigid with the covering (11).

8. An apparatus for assembling a seat element according to one of claims 1 to 6, characterised in that it comprises a hollow template (31) intended to receive a previously padded seat element, the said template (21) having a bottom the shape of which matches that of the seat element which is provided, and which is provided over its entire interior periphery with retractable blades (33) of a resilient material, inserted into inclined grooves (35) for ensuring and maintaining tension.

9. An apparatus according to claim 8, characterised in that the template (31) comprises axial grooves (37) for receiving blades (33) pushed back by the seatelement (1) when it enters the template, the blades (33) tending to resume their normal projected position once the frame-work (3) arrives at the level of the said grooves (37) in order to maintain tensioning of the covering.

10. An apparatus according to claim 7 or 8, characterised in that the template (31) can be separated into two parts on at least a median plane (37) in order to facilitate extraction of the seat.

## FIG.1

## FIG.2

## FIG.4

## FIG 3